# FASCICULE DE BREVET EUROPEEN

(11) **EP 3 053 326 B1**
(45) Date de publication et mention de la délivrance du brevet: **22.07.2020**
(21) Numéro de dépôt: 14796196.5
(22) Date de dépôt: 25.09.2014
(51) Int. Cl.: H04L 29/08

(54) **PROCÉDÉ D'ACCÈS D'UN UTILISATEUR A AU MOINS UN SERVICE DE COMMUNICATION FOURNI PAR L'INTERMÉDIAIRE D'UN CENTRE INFORMATIQUE D'UN SYSTÈME D'INFORMATIQUE EN NUAGE**
VERFAHREN ZUM ZUGRIFF EINES BENUTZERS AUF MINDESTENS EINEN KOMMUNIKATIONSDIENST ÜBER EIN DATENZENTRUM IN EINEM CLOUD-COMPUTERSYSTEM
METHOD FOR A USER TO ACCESS AT LEAST ONE COMMUNICATION SERVICE PROVIDED VIA A DATA CENTRE OF A CLOUD COMPUTING SYSTEM

(30) Priorité: 30.09.2013 FR 1359419
(43) Date de publication de la demande: 10.08.2016
(73) Titulaire: ORANGE, 75015 Paris (FR)
(72) Inventeur: LABRANCHE, Miguel, F-94380 BONNEUIL SUR MARNE (FR)
(74) Mandataire: Plasseraud IP
(86) Numéro de dépôt international: PCT/FR2014/052407
(87) Numéro de publication internationale: WO 2015/044597

(56) Documents cités:
- WO-A1-2011/150968
- US-A1- 2011 138 048

## Description

L'invention se rapporte au domaine général des télécommunications, et notamment aux systèmes informatiques dit « en nuage », connus également sous le nom de systèmes de *cloud computing.*

Elle concerne plus particulièrement l'accès d'un utilisateur à au moins un service de communications fourni par l'intermédiaire d'un centre informatique d'un système d'informatique en nuage.

Selon la définition donnée par le *National Institute of Standards and Technology* (NIST), l'informatique en nuage ou *cloud computing* est un modèle permettant à des utilisateurs d'accéder via un réseau, à la demande et en libre-service, à des ressources informatiques - telles qu'un espace de stockage, de la puissance de calcul, des applications, des logiciels ou encore des services - qui sont rendues virtuelles et mutualisées.

Selon le NIST, il existe trois catégories de services qui peuvent être offerts dans le cadre du *cloud computing* : IaaS (*infrastructure as a service*), PaaS (*platform* as a *service*) et SaaS (*software as a service*)*.* L'IaaS en particulier (en français, infrastructure en tant que service) est le service de plus bas niveau. Il consiste à offrir un accès à une infrastructure informatique virtualisée, c'est-à-dire reposant sur des *data centers* (centres informatiques ou centres de traitement de données en français) composés de serveurs (encore appelés « lames ») sur lesquels sont installées des machines virtuelles.

L'IaaS est surtout destinée aux clients-entreprises dont les applications sont hébergées dans des centres informatiques sécurisés gérés par le fournisseur de services en nuage (*cloud service provider* - CSP), ces *data centers* étant en général accessibles sur l'Internet via une connexion sécurisée avec le réseau privé de l'entreprise. De manière générale, le client-entreprise gère, via un portail web, son infrastructure et ses ressources informatiques, il peut ainsi adapter rapidement ses ressources informatiques à ses pics d'activité et au développement de nouvelles applications.

Les services de *cloud computing* fournis par un même fournisseur de services (CSP) dans plusieurs pays (ou régions ou états différents pour un pays étendu) utilisent généralement un ou plusieurs centres informatiques par pays ou région. De manière générale, un client ayant souscrit à une offre de service dans un pays donné, par exemple en France, voit son compte client et ses accès au service gérés par un centre informatique situé dans ce pays (pays d'origine). Si ce client voyage dans un autre pays (pays visité), par exemple les Etats Unis d'Amérique, et s'il désire accéder à ses services *cloud* depuis le pays visité, il devra se connecter via son terminal de communication (PC, tablette, *smartphone*) au réseau de ce pays - c'est-à-dire, pour l'accès local à l'Internet - et transmettre une requête d'accès au service qui sera acheminée au centre informatique du pays d'origine, même si un centre informatique fournissant le même service existe dans le pays visité.

Compte tenu de la distance entre le lieu de connexion du client pour accéder au service, dans le pays visité, et le lieu où se trouve le serveur (*data center*) fournissant le service, dans le pays d'origine, la connexion et la mise en œuvre du service depuis le pays visité peut provoquer une perte significative de la qualité de service (QoS) - gigue, temps de réponse, encombrement du réseau ... -, ainsi qu'un surcoût financier éventuel dû à la connexion réseau inter opérateur. Cela est d'autant plus vrai que les services demandés sont des services de type temps réel tels que des services de communication : voix, vidéo, conférence, messagerie instantanée, ...

Le document D1, US 2011/0138048 A1, décrit un procédé et un système pour fournir à un demandeur (requester) un service d'itinérance (roaming) entre plusieurs fournisseurs de services en nuage (cloud providers).

Le document D2, WO 2011/150968 A1, concerne une méthode de mise à jour de contenus relatifs à un service, entre un dispositif sans fil, communiquant via une interface sans fil, avec un serveur connecté à Internet et fournissant le service, et vise notamment à améliorer la consommation d'énergie et l'utilisation de la bande passante par le dispositif sans fil.

Ainsi, dans ce contexte, il existe un besoin de disposer d'une solution technique permettant à un utilisateur, client d'un service dans un pays d'origine, et en déplacement à l'extérieur de ce pays, de pouvoir accéder au service auquel il a souscrit, en limitant notamment la dégradation de la qualité de service et le surcoût financier dû à l'accès réseau.

La présente vise notamment à répondre au besoin précité en proposant, selon un premier aspect, un procédé d'accès d'un utilisateur à au moins un service de communications fourni par l'intermédiaire d'un premier centre informatique d'un système d'informatique en nuage, le premier centre informatique étant situé dans une première zone géographique.

Conformément à l'invention, le procédé comprend les étapes suivantes, mises en œuvre dans le premier centre informatique :
A) - suite à la connexion d'un terminal de l'utilisateur à un portail web d'accès au service, réception dans le premier centre informatique d'un message d'information de localisation du terminal ;
B) - détermination de la situation géographique du terminal à partir de l'information de localisation du terminal reçue, et si la situation géographique du terminal correspond à une seconde zone géographique distincte de la première zone, alors :
   D) - recherche d'un second centre informatique du système d'informatique en nuage, apte à fournir le service à l'intérieur de la seconde zone ;
   E) - si un tel second centre informatique existe, transfert au second centre informatique des fonctionnalités informatiques adaptées à la fourniture du service de communication à l'utilisateur, afin de mettre en œuvre le service de communication dans le terminal de l'utilisateur à partir du second centre informatique.

Ainsi, grâce au procédé de l'invention, lorsqu'un utilisateur ayant souscrit à un service d'informatique en nuage, se trouve en situation de déplacement ou « d'itinérance », il peut accéder à son service dans de bonnes conditions de qualité et à moindre coût en bénéficiant du transfert des fonctionnalités aptes à mettre en œuvre son service, d'un premier centre informatique vers un second centre informatique, du même fournisseur de service (CSP), ce second centre informatique étant sélectionné du fait de sa proximité avec la localisation géographique du terminal de l'utilisateur.

En pratique, dans le cadre de la présente invention, l'expression « zone géographique » correspond à un territoire et/ou à un pays. De plus, chaque zone géographique est associée à au moins un centre informatique du système d'informatique en nuage, formant ainsi un ensemble de centres informatiques interconnectés par un réseau de communication.

Ainsi, un fournisseur de services d'informatique en nuage disposant d'une offre de services dans plusieurs pays ou territoires différents et mettant en œuvre la présente invention, permet à ses clients de pouvoir bénéficier de leurs services dans les meilleures conditions possibles, même s'ils se trouvent en situation de déplacement à l'extérieur du pays dans lequel ils ont souscrit à l'offre de services.

Selon une caractéristique particulière de l'invention, l'étape D) susmentionnée du procédé est précédée d'une étape C) de mesure de performances réseau entre le premier centre informatique et le terminal de l'utilisateur, cette étape D) étant mise en œuvre seulement si les performances réseau mesurées sont insuffisantes pour satisfaire un niveau déterminé de qualité de service.

Ainsi, la mise en œuvre du transfert de fonctionnalités d'un premier centre informatique vers un second, plus proche de l'utilisateur, est conditionnée à la vérification de la qualité de service réseau entre le premier centre informatique et le terminal de l'utilisateur. Si les performances mesurées sont acceptables, alors il n'est pas nécessaire de mettre en œuvre le transfert de fonctionnalités pour rendre le service à partir d'un centre informatique plus proche de l'utilisateur, ce qui économise en particulier les ressources réseau nécessaires au transfert des fonctionnalités entre le premier et le second centre informatique, et évite en outre le délai d'établissement du service dû au temps nécessaire à ce transfert de fonctionnalités.

Selon une caractéristique d'implémentation de l'invention, l'étape C) de mesure de performances réseau inclut la mesure de la gigue entre le premier centre informatique et le terminal, et la mesure de métriques spécifiques au type de service demandé par l'utilisateur.

La mesure de métriques spécifiques au type de service demandé par l'utilisateur permet de déclencher le transfert de fonctionnalités uniquement lorsque la qualité de service pour le type demandé de service est déterminée comme étant insuffisante. On comprendra en effet que les performances réseau requises ne sont pas les mêmes lorsque le service est par exemple un service de vidéoconférence vis-à-vis d'un simple service de téléphonie.

Selon un mode de réalisation de l'invention, les fonctionnalités informatiques adaptées à la fourniture du service sont mises en œuvre dans une machine virtuelle hébergée par un serveur du premier centre informatique. Dans ce mode de réalisation, à l'étape D), le transfert des fonctionnalités du premier centre informatique vers le second centre informatique correspond à l'envoi vers un serveur du second centre informatique d'une copie de tout ou partie du code d'exécution de cette machine virtuelle et de son contexte d'exécution.

Grâce à la technique de virtualisation utilisée dans le cadre du *cloud computing,* on facilite ainsi le transfert de tout ou partie des fonctionnalités applicatives d'une machine virtuelle hébergée par un serveur d'un premier centre informatique, vers un serveur d'un second centre informatique.

Selon d'autres caractéristiques de mise en œuvre du procédé selon l'invention :
- A l'étape E), la mise en œuvre du service dans le terminal de l'utilisateur, comprend l'envoi à destination du terminal d'un message de notification de changement de centre informatique fournisseur du service, du premier vers le second centre informatique, et l'envoi par le terminal d'une requête d'accès au service à destination du second centre informatique.
- Le système d'informatique en nuage est mis en œuvre par un même fournisseur de services en nuage (CSP), un terminal d'utilisateur étant connecté, dans chaque zone géographique, à un réseau de paquets (réseau IP), tel que l'Internet, par l'intermédiaire d'un réseau d'accès distinct.
- Le réseau de paquets précité est un réseau virtuel privé (VPN) bâti au dessus de l'Internet.
- Un réseau d'accès, précité, d'une zone géographique appartient au groupe comprenant de manière non exhaustive : un réseau local privé, un réseau mobile d'un opérateur de téléphonie mobile, un réseau sans fil (par exemple un réseau WiFi), ou encore, un réseau ADSL fourni par un opérateur de téléphonie, etc.

Corrélativement, selon un second aspect, la présente invention a pour objet un centre informatique (*data center*) d'un système d'informatique en nuage, pour la mise en œuvre d'un procédé d'accès, tel que brièvement exposé *supra,* à un service de communication. Selon l'invention, un tel centre informatique comprend :
- une unité de réception d'un message d'information de localisation en provenance d'un terminal d'utilisateur connecté à un portail web d'accès au service ;
- une unité de détermination de la situation géographique d'un terminal d'utilisateur à partir d'une information de localisation reçue ;
- une unité d'identification d'un second centre informatique apte à fournir un service demandé par un terminal d'utilisateur situé à l'intérieur d'une zone géographique distincte de celle dans laquelle est situé le (premier) centre informatique ;
- une unité de transfert, à un tel second centre informatique, des fonctionnalités informatiques adaptées à la fourniture du service de communication à un terminal d'utilisateur situé dans une zone géographique distincte de celle dudit centre informatique, afin de mettre en œuvre le service de communication dans le terminal à partir du second centre informatique.

En pratique, un tel centre informatique est composé d'un ou plusieurs serveurs qui hébergent chacun des machines virtuelles sur lesquelles sont exécutées les applications des clients du système de *cloud computing.*

Selon une caractéristique particulière d'un centre informatique selon l'invention, l'unité d'identification permettant d'identifier un second centre informatique, comprend un module de communication adapté à communiquer sur le réseau de paquets avec un ensemble de centres informatiques du système d'informatique en nuage, afin de déterminer en temps réel l'état d'activité de l'ensemble de ces centres informatiques.

Ainsi selon l'invention, il est mis en place un réseau de communication spécifique entre les différents centres informatiques du même fournisseur d'informatique en nuage, permettant à ces centres de communiquer entre eux pour s'informer mutuellement de leur état d'activité et de disponibilité.

Selon un troisième aspect, la présente invention concerne un terminal de communication pour la mise en œuvre d'un procédé d'accès à un service de communication, selon l'invention, tel qu'exposé *supra,* et sur lequel est exécutée une application logicielle comprenant :
- un module d'envoi d'un message d'information de localisation à destination d'un premier centre informatique après connexion à un portail web d'accès au service de communication considéré ;
- un module de réception d'un message de notification de changement de centre informatique fournisseur du service, du premier vers un second centre informatique ;
- un module d'envoi d'une requête d'accès au service de communication à destination du second centre informatique.

En pratique, une telle application logicielle s'exécutant sur un terminal de communication selon l'invention peut être mise en œuvre à partir de code exécutable contenu dans une page web téléchargée à partir d'un serveur fournissant le portail web d'accès aux services de communication fournis par le système d'informatique en nuage. Dans ce cas, le module d'envoi d'un message d'information de localisation, peut obtenir par exemple cette information auprès d'une application de géolocalisation native ou préalablement installée dans le terminal de communication (module GPS d'un *smartphone* par exemple).

Selon un quatrième aspect, la présente invention concerne un système d'informatique en nuage pour la mise en œuvre d'un procédé selon l'invention tel que succinctement exposé plus haut. Un tel système d'informatique en nuage comprend un ensemble de centres informatiques selon l'invention, réparti sur un ensemble de zones géographiques et interconnectés par un réseau de communication de paquets, chaque zone étant associée à au moins un centre informatique.

Les entités fonctionnelles et les modules fonctionnels composant respectivement un centre informatique et un terminal de communication selon l'invention sont implémentées sous forme essentiellement logicielle, par conséquent la présente invention a aussi pour objet, selon un dernier aspect, un programme d'ordinateur (ou ensemble de modules logiciels) stocké sur un support d'informations pour la mise en œuvre de tout ou partie des étapes d'un procédé, selon l'invention, d'accès d'un utilisateur à au moins un service de communications fourni par un système d'informatique en nuage, lorsque le programme est exécuté par un processeur - un processeur matériel tel qu'un microprocesseur d'un terminal de communication ou virtuel tel qu'un hyperviseur d'une machine virtuelle hébergée par un serveur.

Par ailleurs, un tel programme d'ordinateur selon l'invention, peut utiliser n'importe quel langage de programmation, et comprendre des programmes sous forme de code source, code objet, ou de code intermédiaire entre code source et code objet, tel que dans une forme partiellement compilée, ou dans n'importe quelle autre forme souhaitable.

L'invention vise aussi par conséquent un support d'enregistrement d'informations lisible par un ordinateur, et comportant des instructions de programme d'ordinateur. Un tel support d'enregistrement peut être constitué par n'importe quelle entité ou dispositif capable de stocker un tel programme. Par exemple, le support peut comporter un moyen de stockage, tel qu'une ROM (*read-only memory),* par exemple un CD ROM (*compact disc ROM*) ou une ROM de circuit microélectronique, ou encore un moyen d'enregistrement amovible tel qu'une clé USB (*Universal Serial Bus*) ou un moyen d'enregistrement magnétique, tel qu'un disque dur. D'autre part, il peut être prévu qu'un ensemble de modules logiciels selon l'invention soit accessible par téléchargement via un réseau de type Internet.

Les avantages procurés par un centre informatique, un terminal de communication, et un programme d'ordinateur, selon l'invention, tels que brièvement exposés *supra,* sont identiques ou contribuent à ceux déjà mentionnés plus haut en relation avec le procédé d'accès à un service de *cloud computing* selon l'invention, et ne seront par conséquent pas rappelés ici.

D'autres caractéristiques et avantages de la présente invention ressortiront de la description détaillée qui suit, laquelle fait référence aux dessins annexés dans lesquels :
- la figure 1 est un schéma illustrant un système d'informatique en nuage selon l'invention ;
- la figure 2 est un organigramme illustrant les principales étapes d'un procédé d'accès, selon l'invention, d'un utilisateur à un service de communication fourni par un système d'informatique en nuage ;
- la figure 3 illustre l'architecture matérielle d'un serveur d'un centre informatique conforme à l'invention, apte à mettre en œuvre un procédé d'accès à un service de communication, selon l'invention ;
- la figure 4 illustre l'architecture matérielle d'un terminal de communication conforme à l'invention, adapté pour mettre en œuvre un procédé d'accès à un service de communication, selon l'invention ; et
- la figure 5 illustre sous forme de diagramme d'échange, un exemple de mise en œuvre d'un procédé d'accès, selon l'invention, d'un utilisateur à un service de communication fourni par un système d'informatique en nuage.

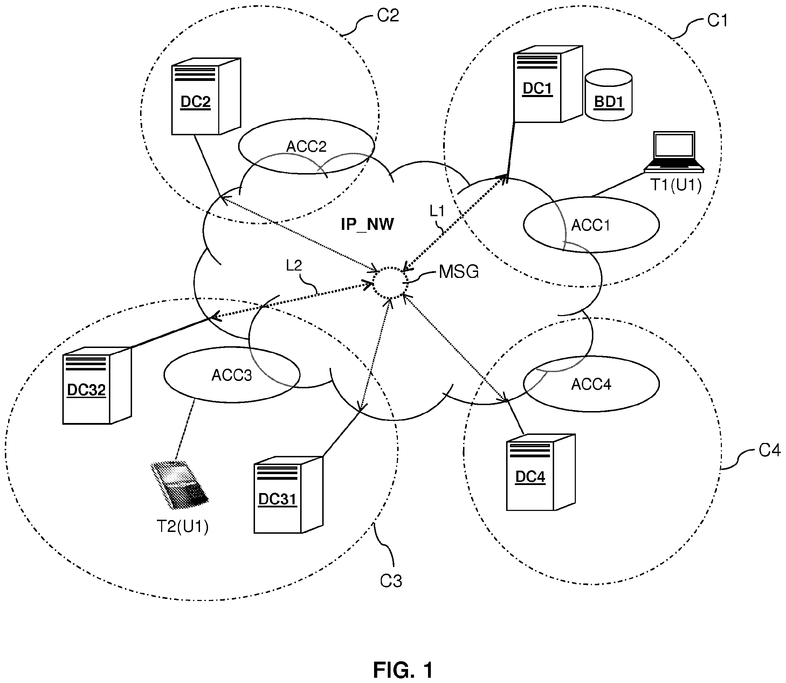

La **figure 1** illustre un système d'informatique en nuage (*cloud computing*) selon l'invention. Dans cet exemple, le système de cloud computing géré par un même opérateur de services en nuage (*cloud service provider* - CSP), comprend un ensemble de centres informatiques ou *data centers* répartis sur un ensemble de zones géographiques différentes - dans cet exemple, quatre pays : C1-C4.

Ainsi, dans cet exemple le pays C1 (par exemple la France) dispose d'un centre informatique DC1 (associé à une base de données BD1), et d'au moins un réseau d'accès ACC1 à un réseau de paquets étendu IP_NW, de type IP (*internet protocol*) tel que l'Internet. De manière correspondante, le pays C2 (par exemple l'Espagne) dispose d'un centre informatique DC2 et d'au moins un réseau d'accès ACC2, le pays C4 (par exemple la Pologne) dispose également d'un centre informatique DC4 et d'au moins un réseau d'accès ACC4. Dans cet exemple, le pays C3 est quant à lui un pays géographiquement plus étendu, par exemple les USA, et dispose de deux centres informatiques différents DC31, DC32 ainsi que d'au moins un réseau d'accès ACC3.

A noter que le réseau de paquets IP_NW peut être un réseau virtuel privé (VPN) bâti au dessus de l'Internet. Ce type de réseau (VPN) est particulièrement adapté, pour des raisons de sécurité informatique, au cas où les utilisateurs du système d'informatique en nuage font partie d'une entreprise.

Chaque réseau d'accès peut être un réseau de téléphonie mobile d'un opérateur de téléphonie mobile du pays considéré, un réseau de téléphonie fixe d'un opérateur local offrant un accès à l'Internet de type ADSL (*Asymmetric Digital Subscriber Line*), ou encore un réseau privé d'entreprise de type LAN (*Local Area Network*) ou WLAN (*Wireless* LAN).

Par conséquent, dans chacune des zones géographiques, un utilisateur d'un service se connecte au moyen de son terminal de communication au réseau de paquets IP_NW, par l'intermédiaire d'un réseau d'accès spécifique. Ainsi, dans la zone C1, la France par exemple, un utilisateur U1 se connecte avec son ordinateur portable T1(U1) au réseau d'accès ACC1, par exemple un réseau IP d'entreprise (Intranet), au réseau IP_NW, pour accéder à ses services souscrits initialement auprès du centre informatique DC1. Ce même utilisateur U1 en déplacement dans la zone C3 (Etats-Unis), se connecte au réseau IP_NW avec son téléphone mobile de type téléphone intelligent (*smartphone*), T2(U1), par l'intermédiaire du réseau d'accès ACC3, ici un réseau mobile d'un opérateur de téléphonie mobile de la zone considérée C3.

Comme représenté sur la figure 1, les différents centres informatiques DCi sont interconnectés par un réseau de communication MSG spécifique mis en œuvre au dessus du réseau IP étendu IP_NW. Ce réseau MSG permet l'échange de messages de signalisation entre les différents centres informatiques. Chaque centre informatique comprend ainsi un module de communication adapté à communiquer sur le réseau IP_NW avec les autres centres informatiques du système d'informatique en nuage, afin de déterminer en temps réel l'état d'activité et de disponibilité des autres centres informatiques. A cet effet, chaque centre informatique, tel que le centre DC1 dans la zone C1, est associé à une base de données (BD1 pour le centre DC1) dans laquelle sont mémorisées notamment les informations suivantes :
- La liste des centres informatiques dédiés au même fournisseur de services *cloud,* leur état d'activité et de charge, les ressources informatiques disponibles dans chaque centre informatique.
- La liste des objets informatiques gérés par chaque centre informatique : ressources, machines virtuelles, applications, ...
- La liste des utilisateurs (personnes ou entreprises) ayant souscrit à un service fourni par le système d'informatique en nuage, ainsi que pour chaque utilisateur, l'identification du centre où l'utilisateur considéré a effectué sa souscription initiale, c'est-à-dire la zone où le ou les services souscrits ont leurs performances nominales - ce centre étant alors désigné par "centre informatique d'origine" pour l'utilisateur considéré.
- Un historique des transferts de fonctionnalités ayant eu lieu d'un centre vers un autre pour chaque utilisateur, un transfert de fonctionnalités correspondant à l'envoi d'un serveur d'un centre informatique vers un serveur d'un autre centre d'une copie de tout ou partie du code d'exécution d'une machine virtuelle associée à un utilisateur, et de son contexte d'exécution.

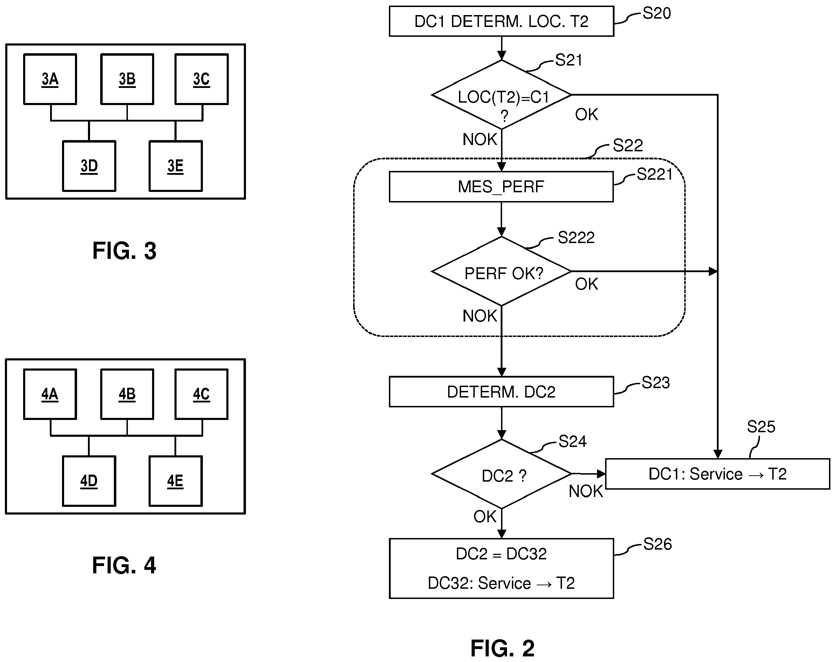

En relation avec la **figure 2****,** on va décrire plus en détail les principales étapes d'un procédé d'accès, selon l'invention, d'un utilisateur à un service de communication fourni par un système d'informatique en nuage.

Afin d'expliquer le déroulement du processus d'accès selon l'invention, on considère à nouveau l'exemple de l'utilisateur U1 mentionné plus haut en relation avec la figure 1. Celui-ci a souscrit à des services de communication dans son pays d'origine C1, la France, son compte utilisateur est donc géré par le centre informatique DC1 et ses données d'identification d'utilisateur sont enregistrées dans la base de données BD1 associée au centre DC1. En déplacement dans le pays C3 (USA), l'utilisateur U1 se connecte avec son terminal mobile T2 (*smarphone*) au réseau IP_NW (Internet dans cet exemple) par l'intermédiaire du réseau d'accès ACC3 (réseau mobile) et ouvre via un navigateur web installé dans le terminal une page web d'un portail d'accès aux services du fournisseur de services d'informatique en nuage, ce portail pouvant être hébergé directement dans un serveur du centre informatique d'origine DC1 ou bien dans un serveur intermédiaire sur Internet (non représenté).

Comme illustré sur la figure 2, à l'étape S20, suite à la connexion au portail d'accès aux services d'informatique en nuage, un message d'information de localisation du terminal T2 est transmis au centre informatique de référence pour l'utilisateur U1, c'est-à-dire DC1 dans lequel est alors mise en œuvre une opération de détermination de la situation géographique du terminal T1 à partir de l'information de localisation reçue.

La géolocalisation du terminal de l'utilisateur peut être effectuée par une application installée dans le terminal (application de localisation GPS par exemple) ou bien mise en œuvre directement dans la machine virtuelle gérant le compte de cet utilisateur dans le centre informatique DC1. Par exemple, l'application du centre informatique DC1 accédée par le terminal T2 peut mettre en œuvre un outil de localisation basé sur la connaissance de l'adresse IP du terminal, tel que l'outil de géolocalisation GeolP™ de la société MaxMind.

Suite à la détermination de la géolocalisation du terminal de l'utilisateur U1, un test S21 est effectué afin de déterminer si la situation géographique du terminal de l'utilisateur (U1) correspond à la zone géographique d'origine (C1). Si c'est le cas (OK), alors, à l'étape S25, le service est rendu de manière classique à partir du centre informatique d'origine DC1 (cas où l'utilisateur U1 utilise son terminal T2 dans la zone C1). En revanche, si la localisation du terminal T2 de l'utilisateur ne correspond pas à la zone d'origine (S21, NOK) mais à une zone géographique (C3, "seconde zone") distincte de la zone d'origine (C1, "première zone"), alors, selon une première variante de réalisation simplifiée du procédé objet de l'invention, on passe directement à l'étape S23 de recherche d'un second centre informatique du système d'informatique en nuage, apte à fournir le service à l'intérieur de la seconde zone identifiée (C3). Selon une seconde variante de réalisation plus sophistiquée et aussi plus performante, du procédé, lorsque la seconde zone est distincte de la première zone (S21, NOK), on passe à une étape S22 de mesure de performances réseau entre le premier centre informatique et le terminal de l'utilisateur, l'étape S23 étant mise en œuvre seulement si les performances réseau mesurées sont insuffisantes pour satisfaire un niveau déterminé de qualité de service.

L'étape S22 précitée commence par une opération S221 de mesure de performances réseau entre le centre informatique d'origine (DS1) et le terminal (T2) de l'utilisateur (U1) localisé dans la zone (C3) distincte de celle d'origine (C1). Selon un exemple de réalisation, cette opération (S221) de mesure de performances réseau inclut la mesure de la gigue (*jitter* en anglais) entre le centre informatique d'origine (DC1) et le terminal de l'utilisateur (T2), ainsi que la mesure de métriques spécifiques au type de service demandé par l'utilisateur. Concernant le paramètre *jitter,* on pourra se référer à la spécification de l'IETF située à l'adresse web suivante : http://tools.ietf.org/html/rfc3393.

En pratique, la mesure des performances réseau est déclenchée par une application exécutée dans un serveur du centre informatique d'origine et utilise le protocole de communication SNMP (*Simple Network Management Protocol*), en français « protocole simple de gestion de réseau », qui est un protocole de communication permettant aux administrateurs réseau de gérer les équipements du réseau, de superviser et de diagnostiquer des problèmes réseaux et matériels à distance. Les valeurs mesurées en utilisant le protocole SNMP sont comparées à des valeurs de référence (dites encore « nominales »), lesquelles varient en fonction du type de service demandé par l'utilisateur. Par exemple, les performances requises, en termes de débit et de temps de réponse notamment, sont plus élevées s'il s'agit d'un service de vidéoconférence à plusieurs, que s'il s'agit d'une simple communication audio ou d'une consultation d'images stockées dans un espace personnel dans le nuage.

Selon une implémentation possible, concernant un service de voix, la mesure des performances peut prendre ne compte en outre un calcul périodique d'une note MOS (*Mean Opinion Score*) - « note d'opinion moyenne » en français - calculée de manière objective en utilisant une méthode connue telle que la méthode PESQ (*Perceptual Evaluation of Speech Quality).*

Une fois les performances mesurées (S221), celles-ci sont comparées (S222) avec les valeurs nominales requises pour le service considéré - les valeurs nominales sont par exemple stockées dans la base de données (BD1) associée au centre informatique d'origine (DC1). Si les performances mesurées sont suffisantes (S222, OK) alors le service est rendu de manière classique à partir du centre informatique d'origine DC1 (S25).

Dans le cas contraire (S222, NOK), à l'étape S23 qui suit, on effectue une recherche d'un second centre informatique du système d'informatique en nuage, apte à fournir le service demandé, à l'intérieur de la zone dans laquelle est situé le terminal (T2) de l'utilisateur. A cette fin, l'application exécutée dans le centre informatique d'origine (DC1) ("premier centre") consulte la base de données associée (BD1) pour déterminer - par exemple à partir d'une table d'implantation géographique de centres informatiques dans la zone (C3) (dite « zone visitée ») dans laquelle se situe l'utilisateur (T2(U1)) -, un centre informatique qui est apte à fournir le service demandé à l'intérieur de la zone visitée, en fonction notamment de la proximité géographique du centre considéré avec le terminal, de la charge réseau dans le secteur de ce centre, de la charge de travail courante du centre.

Ainsi, à l'étape de test S24, si aucun centre informatique n'est disponible (S24, NOK), dans la zone visitée, alors le service est rendu de manière classique à partir du centre informatique d'origine DC1 (S25). Dans le cas contraire, si un tel centre informatique à proximité du terminal de l'utilisateur est trouvé (S24, OK), alors à l'étape S26 qui suit, les fonctionnalités informatiques adaptées à la fourniture du service de communication demandé par l'utilisateur sont transférées du centre informatique d'origine (DS1) vers le second centre informatique (DC32) identifié, afin de mettre en œuvre le service de communication dans le terminal de l'utilisateur à partir de ce second centre.

Selon un mode de réalisation, l'utilisateur est informé au travers d'une interface graphique affichée dans son terminal du transfert ou non des fonctionnalités de service d'un centre informatique vers un autre. Dans ce cas, le choix peut être donné à l'utilisateur de déclencher ou d'annuler le transfert de fonctionnalités.

A cet effet, la détermination d'un second centre informatique localisé dans la zone où est localisé l'utilisateur, est suivi de l'envoi à destination du terminal d'un message de notification de changement de centre informatique fournisseur du service, du centre d'origine vers le second centre informatique ; puis, sous réserve de la validation éventuelle du transfert par l'utilisateur, de l'envoi par le terminal d'une requête d'accès au service à destination du second centre informatique.

La **figure 3** illustre l'architecture matérielle d'un serveur d'un centre informatique apte à mettre en œuvre un procédé d'accès à un service de communication, selon l'invention.

Dans le mode de réalisation décrit ici, le serveur de centre informatique (*data center*) dispose de l'architecture matérielle d'un ordinateur ; il comporte notamment un processeur 3A, une mémoire morte 3B ou ROM, une mémoire vive 3C ou RAM (*random access memory*), une mémoire non volatile 3D (disque dur par exemple) et des moyens de communication 3E avec, notamment, les autres centres informatiques répartis dans les différentes zones géographiques couvertes par le service d'informatique en nuage. Ces moyens de communication 3E intègrent en particulier une carte réseau, connue en soi et non détaillée ici.

La mémoire morte 3B du serveur du centre informatique constitue un support d'enregistrement conforme à l'invention, lisible par le processeur 3A et sur lequel est enregistré un programme d'ordinateur ou ensemble logiciel conforme à l'invention, comportant des instructions pour l'exécution des étapes d'un procédé d'accès d'un utilisateur à un service d'informatique en nuage conforme à l'invention, décrites précédemment en référence à la figure 2.

Cet ensemble logiciel définit de façon correspondante des entités fonctionnelles du centre informatique, aptes à mettre en œuvre ces étapes, et en particulier :
- Une unité de réception d'un message d'information de localisation en provenance d'un terminal d'utilisateur connecté à un portail web d'accès aux services de *cloud computing ;*
- Une unité de détermination de la situation géographique d'un terminal d'utilisateur à partir d'une information de localisation reçue.
- Une unité d'identification d'un second centre informatique apte à fournir un service demandé par un terminal d'utilisateur situé à l'intérieur d'une zone géographique distincte de celle dans laquelle est situé le centre informatique ; cette unité d'identification comprenant un module de communication adapté à communiquer sur le réseau de paquets (IP_NW, fig.1) avec l'ensemble de centres informatiques du système d'informatique en nuage, afin de déterminer en temps réel l'état d'activité de ces centres informatiques.
- une unité de transfert, à un tel second centre informatique, des fonctionnalités informatiques adaptées à la fourniture du service de communication à un terminal d'utilisateur situé dans une zone géographique distincte de celle du centre informatique (centre informatique d'origine), afin de mettre en œuvre le service de communication dans le terminal à partir du second centre informatique.

La **figure 4** illustre l'architecture matérielle d'un terminal de communication conforme à l'invention, adapté pour mettre en œuvre un procédé d'accès à un service de communication tel que décrit plus haut. Un tel terminal de communication, peut être par exemple, un ordinateur personnel (PC fixe, ordinateur portable, tablette numérique) ou un téléphone mobile de type *smartphone.* Il est conçu par conséquent selon l'architecture matérielle d'un ordinateur, et comporte notamment un processeur 4A, une mémoire morte 4B ou ROM, une mémoire vive 4C ou RAM, une mémoire non volatile 4D (disque dur par exemple) et des moyens de communication 4E avec, notamment, un serveur hébergeant un portail d'accès aux services fournis par le système d'informatique en nuage, et avec les centres informatiques répartis dans les différentes zones géographiques couvertes par le service d'informatique en nuage. Ces moyens de communication 4E intègrent en particulier une carte réseau, connue en soi et non détaillée ici.

La mémoire morte 4B du terminal de communication constitue un support d'enregistrement conforme à l'invention, lisible par le processeur 4A et sur lequel est enregistré un programme d'ordinateur ou application logicielle conforme à l'invention, comportant des instructions pour l'exécution des étapes d'un procédé, selon l'invention, d'accès à un service d'informatique en nuage, qui sont mises en œuvre dans le terminal. Ce programme définit de façon correspondante des modules fonctionnels du terminal aptes à mettre en œuvre ces étapes, et en particulier :
- un module d'envoi d'un message d'information de localisation à destination d'un premier centre informatique après connexion à un portail web d'accès au service ;
- un module de réception d'un message de notification de changement de centre informatique fournisseur du service, du premier vers un second centre informatique;
- un module d'envoi d'une requête d'accès au service à destination du second centre informatique.

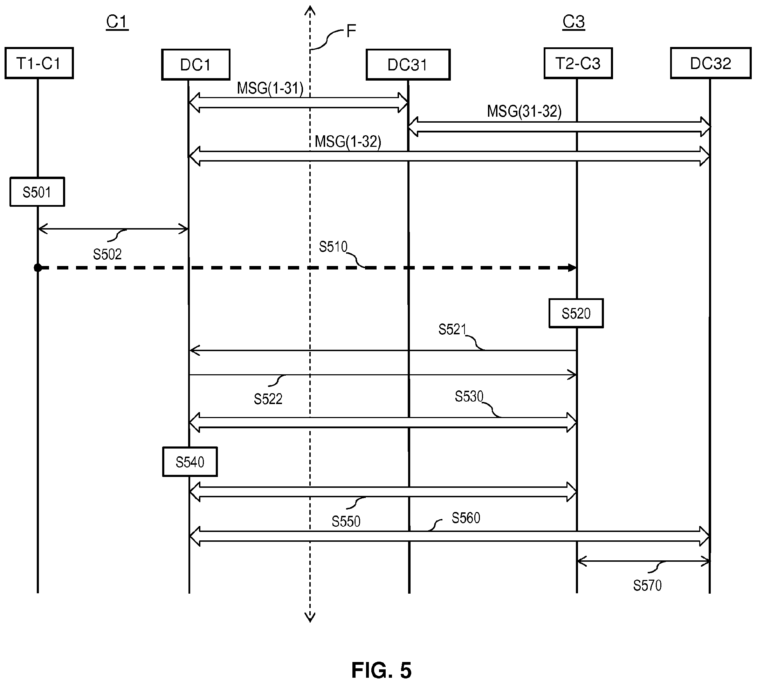

La **figure 5** illustre sous forme de diagramme d'échange, la mise en œuvre du procédé d'accès à un service de communication selon l'invention, dans l'exemple de système d'informatique en nuage décrit plus haut en relation avec les figures 1 et 2.

Sur le diagramme représenté les entités suivantes de la figure 1 sont représentées : le terminal T1 de l'utilisateur U1 qui se trouve initialement dans la zone C1 (T1-C1), le centre informatique DC1 d'origine pour l'utilisateur U1 (centre gérant le compte de l'utilisateur U1), les centres informatiques DC31 et DC32 associés à la zone C3 (séparation avec la zone C1 symbolisée par la double flèche F) ; et le terminal T2 de l'utilisateur U1 lorsque ce dernier est en déplacement dans la zone C3 (T2-C3).

Sur le diagramme d'échanges, les doubles flèches référencées MSG(1-31), MSG(1-32), MSG(31-32) représentent les messages de signalisation échangés entre les centres informatiques (DC1, DC31, DC32) pour s'informer mutuellement de leur présence et activité. Ces messages utilisent en particulier les fonctions *Alive* et *RespOK* définies en Annexe.

En pratique, selon un exemple d'implémentation, les échanges entre les différents centres informatiques utilisent un format de données connu sous le sigle JSON (*JavaScript Object Notation*).

Lors de l'opération S501, l'utilisateur U1 situé dans la zone C1 (par exemple dans les locaux de son entreprise) se connecte via son terminal T1 (PC portable) au portail d'accès aux services auxquels il a souscrit ; son terminal T1 étant situé dans la zone d'origine C1, les services demandés sont directement fournis par le centre informatique DC1 (étape S502).

Ultérieurement (flèche S510), l'utilisateur effectue un déplacement professionnel du pays C1 (France) vers le pays C3 (USA) équipé de son terminal mobile T2 (smartphone). Au cours de l'opération S520, l'utilisateur se connecte avec son terminal mobile (T2) au portail d'accès à la plateforme de services.

Au cours de l'échange de messages S521 et S522 le terminal T2 transmet au centre informatique de référence DC1 sa localisation et reçoit un accusé de réception de la part du centre DC1 ; cet échange de messages utilise les fonctions *SetNewLocation* et *RespOK* définies en Annexe.

L'échange de messages suivant, S530, correspond à la mesure de performances réseau entre le centre d'origine DC1 et le terminal utilisateur T2. Cette opération de mesure de performances utilise les fonctions *GetJitter, GetMetrics* et *RespOK* définies en Annexe.

Suite à l'obtention des résultats de mesure de performance, lors de l'opération S540, le centre informatique DC1 détermine que ceux-ci sont insuffisants pour satisfaire à la qualité de service requise, et recherche un centre informatique dans la zone C3 où est localisé le terminal T2. Le centre DC1 identifie le centre secondaire DC32 disponible dans la zone C3, et en informe (échange S550) le terminal T2 par un message de notification auquel répond favorablement le terminal T2 (de manière automatique ou sous contrôle de l'utilisateur). L'échange S550 utilise les fonctions *Notification* et *RespOK* définies en Annexe.

Lors de l'échange S560 suivant qui a lieu entre le centre informatique DC1 d'origine et le centre informatique DC32 sélectionné dans la zone C3 visitée par l'utilisateur, on effectue le transfert, du centre DC1 vers le centre DC32, des fonctionnalités de service nécessaires à la mise en œuvre du service demandé par l'utilisateur, depuis le centre secondaire DC32. Sur la figure 1, le transfert de fonctionnalités est illustré par les doubles flèches en trait pointillé L1 et L2.

L'échange de messages entre les centres DC1 et DC32 pour le transfert de fonctionnalités précité (S560), utilise les fonctions *Select, Move, RespOK* définies en Annexe.

Enfin, une fois terminé le transfert de fonctionnalités vers le centre informatique DC32, ce dernier en informe le terminal T2 de l'utilisateur, qui confirme par un message de réponse, la bonne réception de l'information (échange S570). L'échange S570 précité utilise les fonctions *Notification* et *RespOK.*

L'utilisateur U1 peut alors exécuter le service demandé avec son terminal T2, en bénéficiant d'une qualité de service optimale et de coûts financiers minimisés, puisque le service est fourni par un centre informatique du fournisseur de services en nuage, situé dans la zone géographique où se trouve l'utilisateur.

### Annexe

Ci-dessous, on donne un exemple de définitions de fonctions correspondant à des commandes qui sont transmises à l'intérieur des messages échangés entre les différents centres informatiques d'un fournisseur de services en nuage, répartis sur un ensemble de zones géographiques distinctes.

### • Fonction Alive

```
  {"Nom fonction": "Alive",
   "parameter1" : "From idDC"
  }
```

Où *idDC* est une identifiant unique du centre 'DC'
Action : permet au DC (*data center*) identifié par *idDC* d'indiquer sa présence dans le réseau de communication inter DC. Ce message est envoyé en mode diffusion (*broadcast*) à l'ensemble des centres DC.

### • Fonction Select

```
  {"Nom fonction": "Select",
   "parameter1" :"idDC"
   "parameter2" :"idObjet"
  }
```

Où *idObjet* désigne un identifiant unique permettant d'identifier un objet informatique : machine virtuelle (VM), applicatif, objet binaire, ressource (CPU, mémoire, espace de stockage).
Action : permet de choisir/sélectionner un objet informatique particulier d'un *DC* identifié.

### • Fonction Move

```
  {"Nom fonction": "Move",
   "parameter1" : "Objet",
   "parameter2" : "From idDC",
   "parameter3" : "To idDC"
  }
```

Action : permet de déplacer un *Objet* d'un *DC* vers un autre *DC.*

### • Fonction Notification

```
  {"Nom fonction": "Notification",
   "parameter1" :"Type",
   "parameter2" :" From idDC",
   "parameter3" :" To idDC/idApp ",
   "parameter4" :"Objet",
  }
```

Où *Type* désigne un type de message de notification vers l'application d'un terminal d'utilisateur ; *idAPP* désigne un identifiant unique de l'équipement utilisateur (exemple : adresse IP).
Action : permet l'envoi de messages de notification d'événement relatif à un *Objet* entre DC, ou bien d'un DC vers un équipement de terminal *idAPP.*

### • Fonction GetJitter

```
  {
   "Nom fonction": "GetJitter",
   "parameter1" :"From idDC",
   "parameter2" :"To idApp"
  }
```

Action : permet de mesurer la gigue (*jitter*) dans la transmission des paquets entre un DC hébergeant un service et l'équipement utilisateur connecté au service.

### • Fonction GetLocation

```
  {
   "Nom fonction": "GetLocation",
   "parameter1" :"From idDC",
   "parameter2" :"To idApp"
  }
```

Action : permet de récupérer la localisation de l'équipement de l'utilisateur se connectant au service.

### • Fonction Message

```
  {
   "Nom fonction": "Message",
   "parameter1" :"LeMessage",
   "parameter2" :"From idDC/idApp",
   "parameter3" :"To idDC/idApp ",
   "parameter4" :"Objet"
  }
```

Action : permet d'envoyer un message 'leMessage' d'un DC à un autre DC, ou d'un DC à un applicatif utilisateur.

### • Fonction GetMetrics

```
  {
   "Nom fonction": "GetMetrics",
   "parameter1" : "From idDC",
   "parameter2" : "To idApp",
   "parameter3" : "Objet",
   "parameter4" : "[Stat1, Stat2, StatN]"
  }
```

Où *Stati* un type de métrique requis (note MOS, pourcentage perte de paquets, métrique spécifique au type de service, ...).
Action : permet de récupérer les métriques relatives à un service de communication demandé par un utilisateur.

### • Fonction RespOK

```
  {
   "Nom fonction": "RespOK",
   "parameter1" :"From idDC/idApp",
   "parameter2" :"To idDC /idApp",
  }
```

Action : permet d'informer l'émetteur (DC ou équipement utilisateur) d'un message, que celui-ci a été bien reçu.

### • Fonction SetNewLocation

```
  {
   "Nom fonction": "SetNewLocation",
   "parameter1" :"From idApp",
   "parameter2" :"to idDC",
   "parameter3" :"theLocation"
  }
```

Où *theLocation* correspond à la localisation de l'équipement utilisateur.
Action : permet à un terminal utilisateur de transmettre sa localisation à un DC.

## Revendications

1. **Procédé** d'accès d'un utilisateur à au moins un service de communication fourni par l'intermédiaire d'un premier centre informatique d'un système d'informatique en nuage mis en œuvre par un même fournisseur de services en nuage, le premier centre informatique étant situé dans une première zone géographique, le procédé étant **caractérisé en ce qu'**il comprend les étapes suivantes, mises en œuvre dans le premier centre informatique :
A) - suite à la connexion (S20) d'un terminal de l'utilisateur à un portail web d'accès audit service, réception dans le premier centre informatique d'un message d'information de localisation du terminal ;
B) - détermination (S20, S21) de la situation géographique du terminal à partir de l'information de localisation du terminal reçue, et si la situation géographique du terminal correspond à une seconde zone géographique distincte de la première zone, alors :
D) - recherche (S23) d'un second centre informatique du système d'informatique en nuage, apte à fournir le service à l'intérieur de la seconde zone ;
E) - si un tel second centre informatique existe (S24), transfert (S26) au second centre informatique des fonctionnalités informatiques adaptées à la fourniture du service de communication à l'utilisateur, afin de mettre en œuvre le service de communication dans le terminal de l'utilisateur à partir du second centre informatique.

2. Procédé selon la revendication 1, dans lequel l'étape D) est précédée d'une étape C) de mesure (S22) de performances réseau entre le premier centre informatique et le terminal de l'utilisateur, l'étape D) étant mise en œuvre seulement si les performances réseau mesurées sont insuffisantes pour satisfaire un niveau déterminé de qualité de service.

3. Procédé selon la revendication 2, dans lequel l'étape C) de mesure de performances réseau inclut la mesure de la gigue entre le premier centre informatique et le terminal, et la mesure de métriques spécifiques au type de service demandé par l'utilisateur.

4. Procédé selon l'une quelconque des revendications 1 à 3, dans lequel à l'étape E), la mise en œuvre du service dans le terminal de l'utilisateur, comprend :
- l'envoi à destination du terminal d'un message de notification de changement de centre informatique fournisseur du service, du premier vers le second centre informatique ;
- l'envoi par le terminal d'une requête d'accès audit service à destination du second centre informatique.

5. Procédé selon l'une quelconque des revendications 1 à 4, dans lequel lesdites fonctionnalités informatiques adaptées à la fourniture du service sont mises en œuvre dans une machine virtuelle hébergée par un serveur du premier centre informatique, et dans lequel, à l'étape D), le transfert desdites fonctionnalités du premier centre informatique vers le second centre informatique correspond à l'envoi vers un serveur du second centre informatique d'une copie de tout ou partie du code d'exécution de ladite machine virtuelle et de son contexte d'exécution.

6. Procédé selon l'une quelconque des revendications 1 à 5, dans lequel une zone géographique correspond à un territoire et/ou à un pays, chaque zone géographique étant associée à au moins un centre informatique du système d'informatique en nuage, formant ainsi un ensemble de centres informatiques interconnectés par un réseau de paquets.

7. Procédé selon la revendication 6, dans lequel un terminal d'utilisateur est connecté, dans chaque zone géographique, au réseau de paquets par l'intermédiaire d'un réseau d'accès distinct.

8. Procédé selon la revendication 7, dans lequel le réseau de paquets est un réseau virtuel privé (VPN) bâti au dessus de l'Internet.

9. Procédé selon la revendication 7 ou 8, dans lequel un réseau d'accès d'une zone géographique appartient au groupe comprenant de manière non exhaustive : un réseau local privé, un réseau mobile d'un opérateur de téléphonie mobile, un réseau ADSL fourni par un opérateur de téléphonie.

10. **Centre informatique** d'un système d'informatique en nuage, pour la mise en œuvre d'un procédé d'accès à un service de communication, selon l'une quelconque des revendications 1 à 9, comprenant :
- une unité de réception d'un message d'information de localisation en provenance d'un terminal d'utilisateur connecté à un portail web d'accès audit service ;
- une unité de détermination de la situation géographique d'un terminal d'utilisateur à partir d'une information de localisation reçue ;
- une unité d'identification d'un second centre informatique apte à fournir un service demandé par un terminal d'utilisateur situé à l'intérieur d'une zone géographique distincte de celle dans laquelle est situé ledit centre informatique ;
- une unité de transfert, à un tel second centre informatique, des fonctionnalités informatiques adaptées à la fourniture du service de communication à un terminal d'utilisateur situé dans une zone géographique distincte de celle dudit centre informatique, afin de mettre en œuvre le service de communication dans ledit terminal à partir du second centre informatique.

11. Centre informatique selon la revendication 10, dans lequel ladite unité d'identification d'un second centre informatique comprend :
- un module de communication adapté à communiquer sur le réseau de paquets avec un ensemble de centres informatiques du système d'informatique en nuage, afin de déterminer en temps réel l'état d'activité desdits centres informatiques.

12. **Terminal** de communication pour la mise en œuvre d'un procédé d'accès à un service de communication, selon l'une quelconque des revendications 1 à 9, sur lequel est exécutée une application logicielle comprenant :
- un module d'envoi d'un message d'information de localisation à destination d'un premier centre informatique après connexion à un portail web d'accès audit service ;
- un module de réception d'un message de notification de changement de centre informatique fournisseur du service, du premier vers un second centre informatique;
- un module d'envoi d'une requête d'accès audit service à destination du second centre informatique.

13. **Système** d'informatique en nuage pour la mise en œuvre d'un procédé selon l'une quelconque des revendications 1 à 9, comprenant un ensemble de centres informatiques selon l'une des revendications 10 ou 11 réparti sur un ensemble de zones géographiques et interconnectés par un réseau de communication de paquets, chaque zone étant associée à au moins un centre informatique.

14. **Programme** d'ordinateur stocké sur un support d'informations pour la mise en œuvre de tout ou partie des étapes d'un procédé selon l'une quelconque des revendications 1 à 9, lorsque le programme est exécuté par un processeur.

## Patentansprüche

1. Verfahren zum Zugriff eines Benutzers auf mindestens einen Kommunikationsdienst, der über ein erstes Datenzentrum eines Cloud-Computing-Systems bereitgestellt wird, das von demselben Cloud-Dienstanbieter betrieben wird, wobei sich das erste Datenzentrum in einem ersten geographischen Gebiet befindet, wobei das Verfahren **dadurch gekennzeichnet ist, dass** es die folgenden Schritte umfasst, die in dem ersten Datenzentrum ausgeführt werden:
A) - im Anschluss an die Verbindung (S20) eines Endgerätes des Benutzers mit einem Webportal zum Zugriff auf den Dienst, Empfang, im ersten Datenzentrum, einer Nachricht mit einer Standortinformation des Endgerätes;
B) - Bestimmung (S20, S21) der geographischen Position des Endgerätes aus der empfangenen Standortinformation des Endgerätes, und falls die geographische Position des Endgerätes einem zweiten geographischen Gebiet entspricht, das von dem ersten geographischen Gebiet verschieden ist, dann:
D) - Suche (S23) nach einem zweiten Datenzentrum des Cloud-Computing-Systems, das in der Lage ist, den Dienst innerhalb des zweiten Gebiets bereitzustellen;
E) - falls ein solches zweites Datenzentrum existiert (S24), Übertragung (S26), an das zweite Datenzentrum, der IT-Funktionalitäten, die für die Bereitstellung des Kommunikationsdienstes für den Benutzer geeignet sind, um den Kommunikationsdienst im Endgerät des Benutzers von dem zweiten Datenzentrum aus auszuführen.

2. Verfahren nach Anspruch 1, wobei dem Schritt D) ein Schritt C) der Messung (S22) von Netzleistungen zwischen dem ersten Datenzentrum und dem Endgerät des Benutzers vorausgeht, wobei der Schritt D) nur ausgeführt wird, falls die gemessenen Netzleistungen nicht ausreichend sind, um ein bestimmtes Dienstgüteniveau zu erreichen.

3. Verfahren nach Anspruch 2, wobei der Schritt C) der Messung von Netzleistungen die Messung des Jitters zwischen dem ersten Datenzentrum und dem Endgerät und die Messung von Metriken, die für den Typ des vom Benutzer angeforderten Dienstes spezifisch sind, beinhaltet.

4. Verfahren nach einem der Ansprüche 1 bis 3, wobei im Schritt E) die Ausführung des Dienstes im Endgerät des Benutzers umfasst:
- das Senden, an das Endgerät, einer Nachricht zur Benachrichtigung über einen Wechsel des Datenzentrums, das den Dienst bereitstellt, vom ersten zum zweiten Datenzentrum;
- das Senden, durch das Endgerät, einer Anforderung zum Zugriff auf den Dienst an das zweite Datenzentrum.

5. Verfahren nach einem der Ansprüche 1 bis 4, wobei die IT-Funktionalitäten, die für die Bereitstellung des Dienstes geeignet sind, in einer virtuellen Maschine ausgeführt werden, die von einem Server des ersten Datenzentrums gehostet wird, und wobei im Schritt D) die Übertragung dieser Funktionalitäten vom ersten Datenzentrum an das zweite Datenzentrum dem Senden einer Kopie des gesamten Ausführungscodes der virtuellen Maschine oder eines Teils davon und ihres Ausführungskontextes an einen Server des zweiten Datenzentrums entspricht.

6. Verfahren nach einem der Ansprüche 1 bis 5, wobei ein geographisches Gebiet einem Territorium und/oder einem Land entspricht, wobei jedes geographische Gebiet mindestens einem Datenzentrum des Cloud-Computing-Systems zugeordnet ist, wobei dadurch eine Gesamtheit von Datenzentren gebildet wird, die durch ein Paketnetz miteinander verbunden sind.

7. Verfahren nach Anspruch 6, wobei ein Benutzerendgerät in jedem geographischen Gebiet über ein separates Zugangsnetz mit dem Paketnetz verbunden ist.

8. Verfahren nach Anspruch 7, wobei das Paketnetz ein virtuelles Privatnetz (VPN) ist, das über das Internet aufgebaut ist.

9. Verfahren nach Anspruch 7 oder 8, wobei ein Zugangsnetz eines geographischen Gebiets der Gruppe angehört, welche unter anderem umfasst: ein privates lokales Netz, ein Mobilfunknetz eines Mobilfunkanbieters, ein ADSL-Netz, das von einem Telefonnetzbetreiber bereitgestellt wird.

10. Datenzentrum eines Cloud-Computing-Systems zur Durchführung eines Verfahrens zum Zugriff auf einen Kommunikationsdienst nach einem der Ansprüche 1 bis 9, welches umfasst:
- eine Einheit zum Empfang einer Nachricht mit einer Standortinformation von einem Benutzerendgerät, das mit einem Webportal zum Zugriff auf den Dienst verbunden ist;
- eine Einheit zur Bestimmung der geographischen Position eines Benutzerendgerätes aus einer empfangenen Standortinformation;
- eine Einheit zur Identifikation eines zweiten Datenzentrums, das in der Lage ist, einen Dienst bereitzustellen, der von einem Benutzerendgerät angefordert wird, das sich im Inneren eines geographischen Gebiets befindet, das von demjenigen verschieden ist, in dem sich das Datenzentrum befindet;
- eine Einheit zur Übertragung, an ein solches zweites Datenzentrum, der IT-Funktionalitäten, die für die Bereitstellung des Kommunikationsdienstes für ein Benutzerendgerät geeignet sind, das sich in einem geographischen Gebiets befindet, das von demjenigen des Datenzentrums verschieden ist, um den Kommunikationsdienst in dem Endgerät von dem zweiten Datenzentrum aus auszuführen.

11. Datenzentrum nach Anspruch 10, wobei die Einheit zur Identifikation eines zweiten Datenzentrums umfasst:
- ein Kommunikationsmodul, das dafür ausgelegt ist, über das Paketnetz mit einer Gesamtheit von Datenzentren des Cloud-Computing-Systems zu kommunizieren, um in Echtzeit den Aktivitätszustand der Datenzentren zu bestimmen.

12. Kommunikationsendgerät zur Durchführung eines Verfahrens zum Zugriff auf einen Kommunikationsdienst nach einem der Ansprüche 1 bis 9, auf welchem eine Softwareanwendung ausgeführt wird, welche umfasst:
- ein Modul zum Senden einer Nachricht mit einer Standortinformation an ein erstes Datenzentrum nach Verbindung mit einem Webportal zum Zugriff auf den Dienst;
- ein Modul zum Empfang einer Nachricht zur Benachrichtigung über einen Wechsel des Datenzentrums, das den Dienst bereitstellt, vom ersten zu einem zweiten Datenzentrum;
- ein Modul zum Senden einer Anforderung zum Zugriff auf den Dienst an das zweite Datenzentrum.

13. Cloud-Computing-System zur Durchführung eines Verfahrens nach einem der Ansprüche 1 bis 9, welches eine Gesamtheit von Datenzentren nach einem der Ansprüche 10 oder 11 umfasst, die über eine Gesamtheit von geographischen Gebieten verteilt sind und über ein Paketkommunikationsnetz miteinander verbunden sind, wobei jedes Gebiet mindestens einem Datenzentrum zugeordnet ist.

14. Computerprogramm, das auf einem Datenträger gespeichert ist, zur Ausführung aller oder eines Teils der Schritte eines Verfahrens nach einem der Ansprüche 1 bis 9, wenn das Programm von einem Prozessor ausgeführt wird.

## Claims

1. **Method** for a user to access at least one communication service provided via a first data centre of a cloud computing system implemented by a given cloud service provider, the first data centre being located in a first geographic area, the method being **characterized in that** it comprises the following steps, executed in the first data centre:
A) - after a user's terminal has been connected (S20) to a web portal for accessing said service, a message providing information on the location of the terminal is received in the first data centre;
B) - the geographic location of the terminal is determined (S20, S21) on the basis of received terminal location information, and if the geographic location of the terminal corresponds to a second geographic area, different from the first area, then:
D) - a search is made (S23) for a second data centre of the cloud computing system capable of providing the service in the second area;
E) - if this second data centre exists (S24), the computing functionality adapted to provide the communication service to the user is transferred (S26) to the second data centre, so that the communication service can be used in the user's terminal, based on the second data centre.

2. Method according to Claim 1, wherein step D) is preceded by a step C) of measuring (S22) the network performance between the first data centre and the user's terminal, step D) being executed only if the measured network performance is insufficient to meet a specified level of quality of service.

3. Method according to Claim 2, wherein step C) of measuring the network performance includes the measurement of the jitter between the first data centre and the terminal, and the measurement of metrics specific to the type of service requested by the user.

4. Method according to any of Claims 1 to 3, wherein, in step E), the use of the service in the user's terminal comprises:
- the sending of a message to the terminal, notifying a change in service provider data centre from the first to the second data centre;
- the sending by the terminal of a request for access to said service to the second data centre.

5. Method according to any of Claims 1 to 4, wherein said computing functionality adapted to the provision of the service is implemented in a virtual machine hosted by a server of the first data centre, and wherein, in step D), the transfer of said functionality from the first data centre to the second data centre corresponds to the sending, to a server of the second data centre, of a copy of some or all of the execution code of said virtual machine and its execution context.

6. Method according to any of Claims 1 to 5, wherein a geographic area is a territory and/or a country, each geographic area being associated with at least one data centre of the cloud computing system, thus forming a set of data centres interconnected by a packet network.

7. Method according to Claim 6, wherein a user terminal is connected, in each geographic area, to the packet network via a different access network.

8. Method according to Claim 7, wherein the packet network is a virtual private network (VPN) built on top of the Internet.

9. Method according to Claim 7 or 8, wherein an access network of a geographic area belongs to the group comprising, but not limited to, a private local network, a mobile network of a mobile telephone operator, and an ADSL network provided by a telephone operator.

10. **Data centre** of a cloud computing system, for the execution of a method of access to a communication service, according to any of Claims 1 to 9, comprising:
- a unit for receiving a location information message from a user terminal connected to a web portal for access to said service;
- a unit for determining the geographic location of a user terminal on the basis of received location information;
- a unit for identifying a second data centre capable of providing a service requested by a user terminal located in a geographic area different from that in which said data centre is located;
- a unit for transferring, to this second data centre, the computing functionality adapted to provide the communication service to a user terminal located in a geographic area different from that of said data centre, so that the communication service can be used in said terminal, based on the second data centre.

11. Data centre according to Claim 10, wherein said unit for identifying a second data centre comprises:
- a communication module adapted to communicate on the packet network with a set of data centres of the cloud computing system, in order to determine in real time the state of activity of said data centres.

12. Communication **terminal** for the execution of a method for access to a communication service according to any of Claims 1 to 9, on which is executed a software application comprising:
- a module for sending a location information message to a first data centre after connection to a web portal for access to said service;
- a module for receiving a message notifying a change of data centre providing the service, from the first to a second data centre;
- a module for sending a request for access to said service to the second data centre.

13. Cloud computing **system** for the execution of a method according to any of Claims 1 to 9, comprising a set of data centres according to either of Claims 10 and 11, distributed over a set of geographic areas and interconnected by a packet communications network, each area being associated with at least one data centre.

14. Computer **program** stored on a data medium for executing some or all of the steps of a method according to any of Claims 1 to 9, when the program is executed by a processor.
